# EUROPÄISCHE PATENTSCHRIFT

(11) **EP 3 222 407 B1**
(45) Veröffentlichungstag und Bekanntmachung des Hinweises auf die Patenterteilung: **12.08.2020**
(21) Anmeldenummer: 16401022.5
(22) Anmeldetag: 24.03.2016
(51) Int. Cl.: B29C 65/20

(54) **SCHWEISSAUTOMAT**
AUTOMATIC WELDING MACHINE
AUTOMATE DE SOUDAGE

(43) Veröffentlichungstag der Anmeldung: 27.09.2017
(73) Patentinhaber: Leister Technologies AG, 6056 Kägiswil (CH)
(72) Erfinder: Sigrist, Flavio, 6064 Kerns (CH); Wildi, Marco, 6064 Kerns (CH)
(74) Vertreter: Klocke, Peter

(56) Entgegenhaltungen:
- DE-C1- 3 837 869
- DE-U1- 7 700 687
- DE-U1- 8 805 783
- DE-U1- 29 719 434
- DE-U1- 29 719 436
- FR-A1- 2 572 997
- JP-A- 2001 121 612

## Beschreibung

Die Erfindung betrifft einen Schweißautomat zum Verschweißen von überlappenden Kunststoffbahnen längs ihren Rändern, mit einer an einem Fahrgestell angeordneten Heizeinrichtung zum randseitigen Anschmelzen der Kunststoffbahnen, wobei das Fahrgestell einen Tragrahmen aufweist, an dem mindestens zwei voneinander beabstandete Laufrollen, mindestens zwei einander gegenüberliegende Anpress- und Vorschubrollen, von denen jeweils eine untere ortsfest angeordnet und die andere obere schwenkbar gelagert ist, und mindestens ein Antriebsaggregat mit Getriebe angeordnet sind, wobei die Laufrollen zum Abstützen auf einem Untergrund, die Anpress- und Vorschubrollen zum Durchführen eines Randes der sich überlappenden Kunststoffbahnen und das Antriebsaggregat und das Getriebe zum Antrieb der Anpress- und Vorschubrollen vorgesehen sind, und mit einem Längsauslegerbiegearm des Tragerahmens, der in Schweißrichtung von dem Tragerahmen absteht und der zumindest in seiner in der Gebrauchslage des Schweißautomaten vertikalen Richtung elastisch verformbar ist.

Derartige Schweißautomaten sind allgemein bekannt und werden zum Verschweißen von Folien, Planen und anderen flächigen Materialien aus Kunststoff eingesetzt. Dabei werden die Kunststoffbahnen im Überlappungsbereich ihrer Ränder mittels Wärmeeintrag plastifiziert und anschließend unter Druckeinwirkung zusammengepresst.

Die Patentanmeldung EP 1 900 501 A1 offenbart einen Schweißautomat zum Verbinden seitlich überlappender Dichtungsbahnen entlang ihren Rändern. Der Schweißautomat weist ein mittels Fahrrollen verfahrbares Fahrgestell sowie eine von einem Tragrahmen des Fahrgestells getragene Heizeinrichtung zum Anschmelzen der zu verschweißenden Kunststoffbahnen auf. Die Kunststoffbahnen werden mittels am Tragerahmen angeordneten und von einer Antriebseinheit, die zumindest ein Antriebsaggregat und ein Getriebe umfasst, angetriebenen Anpress- und Vorschubrollen zusammengepresst. Des Weiteren sind auch Einrichtungen zum Bewegen der mindestens einen oberen Anpress- und Vorschubrolle gegenüber der unteren ortsfesten Anpress- und Vorschubrolle vorgesehen, die eine Spannvorrichtung für die mindestens eine schwenkbar gelagerte obere Anpress- und Vorschubrolle aufweist. So müssen beispielsweise beim überlappenden Verschweißen von Kunststoffbahnen die einzelnen Bahnen an der geplanten Nahtstelle überlappend angeordnet und fixiert werden. Außerdem muss die vorgesehene Heizeinrichtung zwischen die Ränder der miteinander zu verschweißenden Bahnen eingeführt und der Fügedruck aufgebracht werden. Dabei ist häufig je nach gewünschter Nahtgeometrie und dem Verschmutzungsgrad der Lauffläche der Tausch der Anpress- und Vorschubrollen notwendig. Dieser Austausch wird häufig durch die Heizeinrichtung erschwert, die nahe den Anpressund Vorschubrollen angeordnet ist.

Zum Stand der Technik wird weiterhin auf die Druckschriften DE 297 19 434 U1, DE 297 19 436 U1 und DE 77 00 687 U1 verwiesen.

Die DE 297 19 434 U1 offenbart eine Schweißvorrichtung zum überlappenden Verschweißen von Folienrändern, mit einem Heizkörper, über dessen Heizflächen die Folienränder zum Zwecke ihrer Plastifizierung führbar sind, bei der der Heizkörper freibeweglich, im Wesentlichen senkrecht zu den Heizflächen des Heizkörpers beweglich federnd aufgehängt ist, wobei der Heizkörper wenigstens an einem Blattfederarm aufgehängt ist, der sich im Wesentlichen in Richtung der vorgesehenen Bewegungsrichtung der Folienränder erstreckt, sodass der Heizkörper in einer parallelen und quer zur vorgesehenen Bewegungsrichtung der Folienränder gerichtete Achse schwenkbar. Dabei ist der Heizkörper insbesondere in der Weise federnd aufgehängt, dass er unbelastet eine schon weitgehend optimale Stellung für den Einlauf der Folienränder hat, bei der sich die mindestens eine Blattfeder mit ihren Flachseiten im Wesentlichen horizontal erstreckt. Die selbsttätige und optimale Anpassung geschieht dann aufgrund des Anlagedruckes der Folienränder gegen die Wirkung der Feder, die relativ schwach ausgebildet ist. Indessen ist die mindestens eine Blattfeder eingangsseitig eingespannt und erstreckt sich hin zu der Ausgangsseite, wobei an deren freien Ende der Heizkörper aufgehängt ist

Die DE 297 19 436 U1 lehrt eine Schweißvorrichtung zum überlappenden Verschweißen von Folienrändern, mit Anpressrollen zum Zusammenpressen der Folienränder nach deren Erhitzung, die auf Achsen sitzen, von denen wenigstens eine beweglich in Richtung auf die andere Achse und umgekehrt geführt ist, wobei wenigstens eine der Achsen über eine Justiereinrichtung parallel zu der anderen Achse ausrichtbar und in dieser Stellung fixierbar ist und die Justiereinrichtung insbesondere der beweglich geführten Achse zugeordnet ist. Dabei ist diese Achse an zwei Schwenkarmen gehalten, wobei die Justiereinrichtung die beiden Schwenkarme verbindet und eine Brücke zwischen den Schwenkarmen aufweist, welche wenigstens an einem der Schwenkarme lösbar befestigt ist, wobei die Befestigung verstellbar ist.

Die DE 77 00 687 U1 schlägt eine Vorrichtung zum kontinuierlichen Verschweißen von sich am Rand überlappenden Bahnen aus thermoplastischem Kunststoff vor, die eine Führung zum Distanzieren und Zusammenführen der zu verschweißenden Bahnränder und eine Heizeinrichtung zum Plastifizieren der Bahnränder aufweist, welche von der Längsseite eines Gehäuses herauskragend zwischen die in Abstand gehaltenen Bahnränder geführt ist, und bei der im Anschluss an die Heizeinrichtung ein Druckrollenpaar an der Längsseite des Gehäuses angeordnet ist, wobei eine Druckrolle starr und die andere gegen Federkraft verschiebbar gelagert ist, und wobei die Heizeinrichtung als Kontaktschweißkufe, vorzugsweise als Heizkeil ausgebildet ist und einen Teil der Führungseinrichtung bildet. Dabei sind die oberen Druckrollen unabhängig voneinander schwenkbar am oberen Rahmenteil befestigt und durch eine gemeinsame Feder auf das Schweißgut pressbar. Indes sind vor den Druckrollen beidseits der Kontaktschweißkufe zusätzlich Druckrollen angeordnet, um die zu verschweißenden Bahnen auf den keilförmigen Kontaktheizkörper zu pressen, wobei der Anpressdruck vorzugsweise durch Blattfedern ausgeübt wird und die Kontaktschweißkufe als kardanisch gelagerter Heizkeil ausgebildet ist.

Ausgehend von dem vorstehend beschriebenen Stand der Technik liegt der Erfindung die Aufgabe zugrunde, eine Möglichkeit vorzuschlagen, bei der der Austausch der Anpress- und Vorschubrollen erleichtert ist, indem die Befestigung der Heizeinrichtung vereinfacht ist und so eine einfache Positionsänderung gegenüber den Anpress- und den Vorschubrollen ermöglicht. Dabei soll die Befestigung der Heizeinrichtung an dem Tragerahmen konstruktiv einfach und kostengünstig sein.

Diese Aufgabe wird erfindungsgemäß durch einen Schweißautomat mit den Merkmalen des Patentanspruchs 1 gelöst. Weitere vorteilhafte Ausgestaltungen sind den rückbezogenen Patentansprüchen zu entnehmen.

Danach ist der Längsauslegerbiegearm mit einem in Schweißrichtung hinteren Auslegerarmende starr mit dem Tragerahmen verbunden und an einem in Schweißrichtung vorderen Auslegerarmende die Heizeinrichtung mit einem in Schweißrichtung hinteren Einrichtungsabschnitt unbeweglich befestigt, an dem Tragrahmen eine Betätigungseinrichtung für den Längsauslegerbiegearm mit der Heizeinrichtung angeordnet, mit der das vordere Auslegerarmende nach unten, d. h., in der Gebrauchslage des Schweißautomaten, vertikal biegbar ist, wobei die Betätigungseinrichtung über einen Betätigungshebel direkt auf den Längsauslegerbiegearm oder indirekt über die Heizeinrichtung auf den Längsauslegerbiegearm einwirkt . Der Betätigungshebel ist an dem Tragrahmen schwenkbeweglich angeordnet. Durch Krafteinwirkung auf den Betätigungshebel wird die Heizeinrichtung in Richtung der mindestens einen unteren ortsfesten Anpress- und Vorschubrolle bewegt und dabei der Längsauslegerbiegearm gespannt. Bei einer Bewegung des Betätigungshebels in entgegengesetzter Richtung wird der Längsauslegerbiegearm entlastet, so dass dieser sich automatisch entspannt und dabei die Heizeinrichtung von der mindestens einen unteren ortsfesten Anpressund Vorschubrolle wegführt.

Dabei verlängert die Heizeinrichtung bei einer bevorzugten Ausführungsform der Erfindung den Längsauslegerbiegearm in Schweißrichtung. Vorzugsweise handelt es sich bei der Heizeinrichtung um einen Heizkeil, vorzugsweise einen elektrischen Heizkeil. Dabei kann die Heizeinrichtung beispielsweise eine Kontaktheizeinrichtung oder eine Heißluftdüse sein.

Erfindungsgemäß erstreckt sich der Längsauslegerbiegearm in einem nicht verformten Zustand gegenüber der von den Fahrrollen bestimmten Fahrebene in einen spitzen Winkel ansteigend nach oben. Dabei wirkt keine äußere Kraft auf den Längsauslegerbiegearm ein. Der Längsauslegerbiegearm kann linear, gekrümmt oder abgeknickt verlaufen. Die Heizeinrichtung, die an dem vorderen Auslegerarmende angeordnet ist, befindet sich ohne Krafteinwirkung auf den Längsauslegerbiegearm fern der mindestens einen unteren ortsfesten Anpress- und Vorschubrolle und weist zudem vorzugsweise auch zu der oberen schwenkbar gelagerten Anpress- und Vorschubrolle einen Abstand auf. Der Abstand zu der mindestens einen unteren und oberen Anpress- und Vorschubrolle kann dabei beliebig sein. Die Schweißrichtung ist dabei auf den Schweißautomaten bezogen definiert und damit entgegen der üblichen Fahrrichtung des Schweißautomaten orientiert.

Der Längsauslegerbiegearm ist dabei elastisch vertikal verformbar und bestimmt je nach Verbiegung eine unterschiedliche Lage der Heizeinrichtung gegenüber den Anpress- und Vorschubrollen sowie gegenüber den Laufrollen. Dies ermöglicht auf einfache Weise die Heizeinrichtung von den Anpress- und Vorschubrollen weg bzw. zu diesen hin zu schwenken, in dem eine Kraft auf das vordere Auslegerarmende ausgeübt wird. Die Schwenkbewegung des elastisch verformbaren Längsauslegerbiegearms kann dabei durch vorgesehene Endanschläge begrenzt oder durch geeignete Betätigungsmittel, beispielsweise einem Betätigungshebel bestimmt werden. Vorzugsweise ist die Heizeinrichtung zusammen mit der mindestens einen oberen schwenkbaren Anpress- und Vorschubrolle in und entgegen der Richtung der mindestens einen unteren feststehenden Anpress- und Vorschubrolle schwenkbar.

Bei einer bevorzugten Ausführungsform der Erfindung ist an dem Tragerahmen eine Spannvorrichtung für die mindestens eine schwenkbar gelagerte obere Anpress- und Vorschubrolle angeordnet, die mit der Betätigungseinrichtung für den Längsauslegerbiegearm gekoppelt ist, und die die mindestens eine obere schwenkbare Anpress- und Vorschubrolle gegen die mindestens eine ortsfeste untere Anpress- und Vorschubrolle drückt. Beispielsweise wird dadurch der Wechsel der Anpress- und Vorschubrollen sowie das Einführen der Heizeinrichtung zwischen die beiden Ränder der zu verschweißenden Kunststoffbahnen sowie deren Einsetzen zwischen die mindestens zwei einander gegenüberliegenden Anpress- und Vorschubrollen erleichtert, da beim Öffnen der Anpress- und Vorschubrollen gleichzeitig die Heizeinrichtung mitschwenkt.

Bei einer Ausführungsform der Erfindung weist der Betätigungshebel mindestens einen Niederhaltebügel für den Längsauslegerbiegearm auf, der seitlich vom Längsauslegerbiegearm absteht und der bei Betätigung der Betätigungseinrichtung auf die Heizeinrichtung und/oder den Längsauslegerbiegearm einwirkt und dabei die Heizeinrichtung in Schweißposition bringt, indem er den Längsauslegerbiegearm in der Gebrauchslage des Schweißautomaten vertikal nach unten biegt und dabei spannt. Dabei hält bei einer bevorzugten Ausführungsform des erfindungsgemäßen Schweißautomaten der mindestens eine Niederhaltebügel bei voneinander getrennten Anpress- und Vorschubrollen den Rand der überlappenden Kunststoffbahn von der Heizeinrichtung fern. Zudem hebt bei voneinander getrennten Anpress- und Vorschubrollen die Heizeinrichtung von der überlappten Kunststoffbahn ab. Somit wird vor und nach dem Schweißvorgang sowie bei einer kurzen Unterbrechung des Schweißvorgangs eine unerwünschte Plastifizierung der überlappenden Ränder der Kunststoffbahnen zuverlässig verhindert. Der Niederhaltebügel, der unten vorzugsweise seitlich von dem Betätigungshebel absteht, übergreift zumindest teilweise den Längsauslegerbiegearm und/oder die Heizeinrichtung. Der Niederhaltebügel ist bevorzugt gegenüber dem Betätigungshebel einstellbar ausgebildet. Er wird insbesondere für das Verschweißen von dünnen Kunststoffbahnen, d. h., Kunststofffolien verwendet.

Bei einer anderen Ausführungsform des erfindungsgemäßen Schweißautomaten weist der Betätigungshebel mindestens eine Niederhalterolle für den Längsauslegerbiegearm auf, der bei der Betätigung der Betätigungseinrichtung auf die Heizeinrichtung einwirkt und dabei dem Längsauslegerbiegearm in der Gebrauchslage des Schweißautomaten vertikal nach unten biegt. Dabei drückt bei einer begünstigten Ausführungsform der Erfindung die mindestens eine Niederhalterolle bei zwischen den Anpress- und Vorschubrollen geführter überlappender Kunststoffbahn, und in Anlage aneinander befindlichen Anpress- und Vorschubrollen den Rand dieser Kunststoffbahn auf die Heizeinrichtung. Die Niederhalterolle kann dabei bei voneinander getrennten Anpress- und Vorschubrollen den Rand der überlappenden Kunststoffbahn nicht von der Heizeinrichtung fernhalten. Damit erwärmt die Heizeinrichtung bei kurzen Unterbrechungen des Schweißvorgangs den Rand der überlappenden Kunststoffbahn lokal weiter, so dass diese Lösung nur für dicke Kunststoffbahnen geeignet ist. Die mindestens eine Niederhalterolle ist gegenüber dem Betätigungshebel ähnlich wie der Niederhaltebügel einstellbar ausgeführt.

Vorzugsweise ist die Heizeinrichtung durch Biegen des Längsauslegerbiegearms in der Gebrauchslage des Schweißautomaten nach unten mittig zwischen den beiden einander gegenüberliegenden Anpress- und Vorschubrollen positionierbar, wobei sich die Heizeinrichtung selbsttätig automatisch zentriert. Eine Justierung der Heizeinrichtung gegenüber den mindestens zwei einander gegenüberliegenden Anpress- und Vorschubrollen ist nicht notwendig. Dies vereinfacht die Benutzung des erfindungsgemäßen Schweißautomaten und verkürzt zudem den Zeitaufwand beim Rüsten des Schweißautomaten.

Bei einer bevorzugten Ausführungsform der Erfindung ist der Längsauslegerbiegearm aus einem Federblechzuschnitt hergestellt. Der Federblechzuschnitt weist vorzugsweise eine Dicke von 0,3 bis 3,0 mm auf. Dabei ist die Breite des Längsauslegerbiegearms vorzugsweise von einer Länge des Längsauslegerbiegearms abhängig ausgebildet. Für eine ausreichende Stabilität des Längsauslegerbiegearms wird mit zunehmender Länge des Längsauslegerbiegearms dessen Breite auch größer ausgebildet.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen:
- Figur 1: einen erfindungsgemäßen Schweißautomaten mit gegenüberliegenden Anpress- und Vorschubrollen in einer offenen Stellung, in perspektivischer Ansicht;
- Figur 2: den Schweißautomat aus Figur 1 mit Blick auf die Heizeinrichtung und die Anpress- und Vorschubrollen in einer offenen Stellung, in Seitenansicht;
- Figur 3: den Schweißautomaten aus Figur 1 mit einem Niederhaltebügel, mit Blick auf die Heizeinrichtung und die Anpress- und Vorschubrollen in einer geschlossenen Stellung, in Seitenansicht;
- Figur 4: den Schweißautomaten aus Figur 1 mit einer Niederhalterrolle, mit Blick auf die Heizeinrichtung und die Anpress- und Vorschubrollen in einer geschlossenen Stellung, in Seitenansicht; und
- Figur 5: den Schweißautomat gemäß Figur 3 von unten mit Blick auf das Fahrgestell mit dem Längsauslegerbiegearm und der Heizeinrichtung, in Seitenansicht.

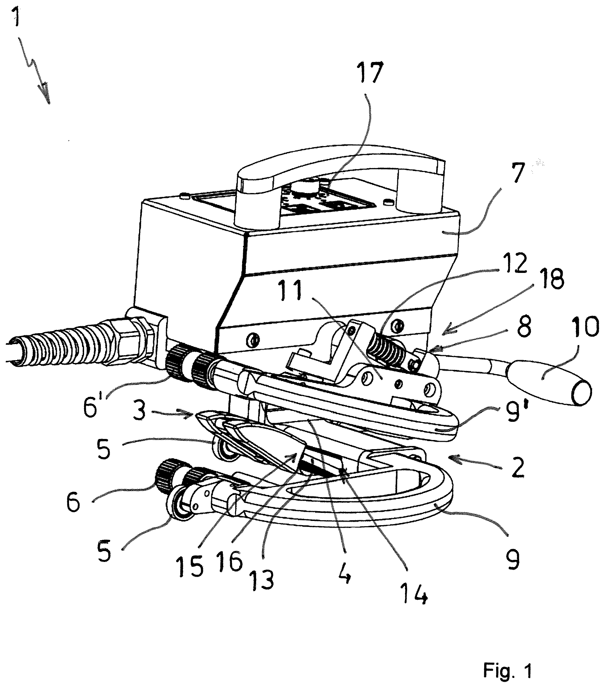

Die Figur 1 zeigt einen erfindungsgemäßen Schweißautomat 1 zum randseitigen überlappenden Verschweißen von in der Zeichnung nicht dargestellten thermoplastischen Kunststoffbahnen. Der Schweißautomat weist ein Fahrgestell 2 mit einer daran angeordneten Heizeinrichtung 3 zum randseitigen Anschmelzen der Kunststoffbahnen auf, wobei das Fahrgestell 2 einen Tragerahmen 4 besitzt, an dem drei voneinander beabstandete Laufrollen 5, zwei einander gegenüberliegende Anpress- und Vorschubrollen 6 ,6' angeordnet sind, von denen jeweils die untere Anpress- und Vorschubrollen 6 ortsfest und die andere obere Anpressund Vorschubrollen 6' schwenkbar gelagert ist. Der Schweißautomat 1 weist zudem eine in der Figur nur teilweise sichtbare Antriebseinrichtung auf, die mindestens ein Antriebsaggregat mit Getriebe 20 umfasst. Die Laufrollen 5 sind zum Abstützen auf einem Untergrund, die Antriebs- und Vorschubrollen 6, 6' zum Durchführen eines Randes der sich überlappenden Kunststoffbahnen und die Antriebseinrichtung zum Antrieb der Anpress- und Vorschubrollen 6, 6' vorgesehen.

Bei dem dargestellten Schweißautomat 1 handelt es sich um eine beispielhafte Ausführungsform, bei der die Antriebs- und Vorschubrollen 6 bzw. 6' jeweils über eine nicht sichtbare biegsame Welle angetrieben werden. Der Tragerahmen 4 des Schweißautomaten 1 ist von drei Laufrollen 5 verfahrbar getragen und trägt selbst zudem ein Gehäuse 7, in der die in der Zeichnung nicht sichtbare Antriebseinrichtung zumindest teilweise aufgenommen ist. Auf den Tragerahmen 4 ist neben dem Gehäuse 7 eine Spannvorrichtung 8 für die der Anpress- und Vorschubrollen 6, 6' angeordnet, die zwei seitliche biegestarre Querausleger 9, 9' aufweist. Der untere Querausleger 9 ist starr mit dem Tragerahmen 4 verbunden, während der obere Querausleger 9' schwenkbar an dem Tragerahmen 4 befestigt ist. Der am Tragerahmen 4 schwenkbeweglich angeordnete Querausleger 9' ist gegenüber dem unbeweglich an dem Tragerahmen 4 angeordneten Querausleger 9 schwenkbar. Die beiden Querausleger 9, 9' der Spannvorrichtung 8 tragen an ihrem freien Ende jeweils eine Anpress- und Vorschubrolle 6 bzw. 6'.Die Querausleger 9, 9' sind in dieser beispielhaften Ausführungsform hohl ausgebildet und führen in ihrem Inneren jeweils eine in der Zeichnung nicht dargestellte biegsame Welle zum Antrieb der Anpress- und Vorschubrollen 6, 6', die von der Antriebseinrichtung ausgehen.

Über ein Schwenken des schwenkbaren oberen Querauslegers 9' wird für den Schweißvorgang ein Spalt zwischen den Anpress- und Vorschubrollen 6 bzw. 6' geschlossen und die dazwischen angeordneten Kunststoffbahnen für den Schweißvorgang geklemmt. Das Schwenken des schwenkbaren Querauslegers 9' erfolgt über einen an dem Tragerahmen 4 angelenkten Betätigungsgriff 10. Der Betätigungsgriff 10 ist an einem Tragelement 11 angeordnet, wobei durch Umlegen des Betätigungsgriffes 10, bei der die gegenüberliegenden Anpress- und Vorschubrollen 6 bzw. 6' offen zueinander stehen, in eine Stellung, bei der die gegenüberliegenden Anpress- und Vorschubrollen 6, 6' in Anlage aneinander sind. Bei der Betätigung des Betätigungsgriffes 10 wird in dieser beispielhaften Ausführungsform eine Spannfeder 12 zusammengedrückt und eine entsprechende Federkraft aufgebaut, die die notwendige Spannkraft zwischen den gegenüberliegenden Anpress- und Vorschubrollen 6 bzw. 6' erzeugt.

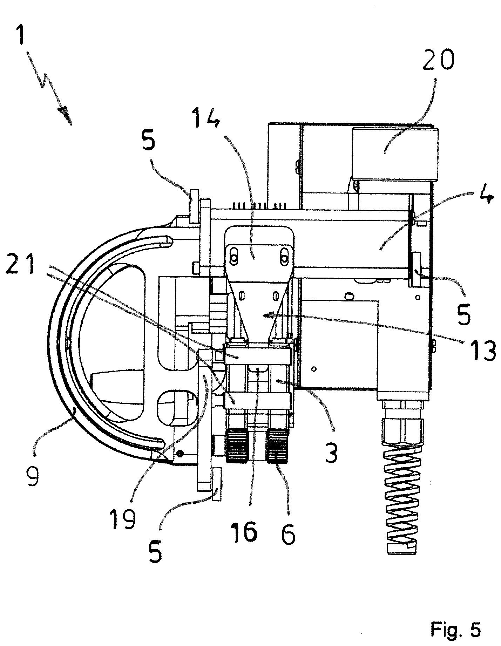

In dem abgebildeten Ausführungsbeispiel ist die Heizeinrichtung 3 als Heizkeil ausgeführt. Die Heizeinrichtung 3 ist an einem Längsauslegerbiegearm 13 des Tragerahmens 4 angeordnet, der in Schweißrichtung von dem Tragerahmen 4 absteht. Der Längsauslegerbiegearm 13 ist zumindest in seiner in der Gebrauchslage des Schweißautomaten 1 vertikalen Richtung elastisch verformbar und mit einem in Schweißrichtung hinteren Auslegerarmende 14 starr mit dem Tragerahmen 4 verbunden. Wie die Figur 5 besser veranschaulicht, ist die Heizeinrichtung 3 mit ihrem in Schweißrichtung hinteren Einrichtungsabschnitt 15 an einem in Schweißrichtung vorderen Auslegerarmende 16 des Längsauslegerbiegearms 13 unbeweglich befestigt. Die Heizeinrichtung 3 verlängert den Längsauslegerbiegearm 13 in Schweißrichtung und ist vorzugsweise mit dem vorderen Auslegerarmende 16 lösbar verschraubt. Der Längsauslegerbiegearm 13 wiederum ist mit seinem hinteren Auslegerarmende 14 mit dem Tragerahmen 4 verschraubt.

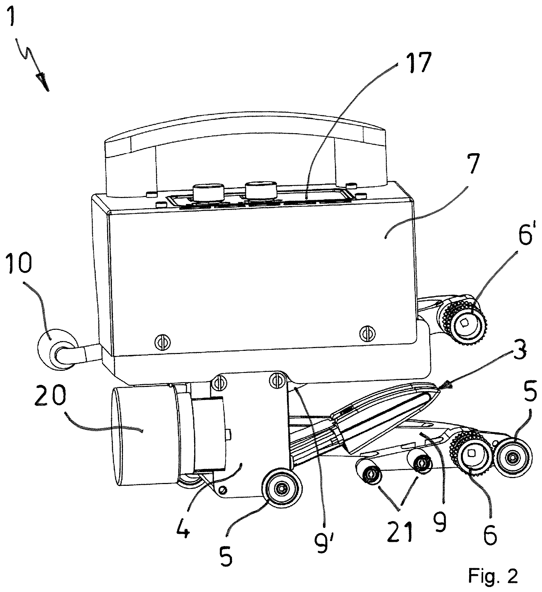

Wie den Figuren 1, 2 zu entnehmen ist, erstreckt sich der Längsauslegerbiegearm 13 in einem nicht verformten Zustand gerade von dem Tragerahmen 4 bis zu der Heizeinrichtung 3. In dem dargestellten nicht verformten Zustand erstreckt sich der Längsauslegerbiegearm 13 gegenüber einer von den Fahrrollen 5 bestimmten Fahrebene in einem spitzen Winkel nach oben. In diesem Zustand ist er ansteigend an dem Fahrgestell 2 angeordnet, so dass die Heizeinrichtung 3 einen Abstand von einigen Zentimetern zu den unteren bzw. oberen Anpress- und Vorschubrollen 6, 6' aufweist. In dem Gehäuse 7 des Schweißautomaten 1 ist zudem eine elektrische Steuerung 17 für das Antriebsaggregat mit Getriebe 20 angeordnet.

Die Figur 2 zeigt den Schweißautomaten 1 aus Figur 1 mit Blick auf die Heizeinrichtung 3 und die Anpress- und Vorschubrollen 6 bzw. 6' in einer offenen Stellung in Seitenansicht. In dieser Ansicht ist der obere schwenkbare Querausleger 9' größtenteils von dem Gehäuse 7 des Schweißautomaten 1 verdeckt. Es ist lediglich die obere schwenkbar gelagerte Anpress- und Vorschubrolle 6' sichtbar. An dem sichtbaren unteren Querausleger 9, an dem die Laufrollen 5 und die untere ortsfest angeordnete Anpress- und Vorschubrolle 6 angeordnet sind, sind in Schweißrichtung nach der unteren ortsfesten Anpress- und Vorschubrolle 6 mindestens eine mit Abstand zu dieser angeordnete Führungsstützrolle 21 für die in der Zeichnung nicht dargestellte untere Kunststoffbahn vorgesehen. Die Spannvorrichtung 8 weist eine an dem Tragerahmen 4 angeordnete durch das Gehäuse 7 in der Figur verdeckte Betätigungseinrichtung 18 für den Längsauslegerbiegearm 13 mit der Heizeinrichtung 3 auf. Diese ist in den Figuren 1 und 5 sichtbar. Mit der Betätigungseinrichtung 18 ist das vordere Auslegerarmende 16 vertikal nach unten biegbar, wobei die Betätigungseinrichtung 18 über einen Betätigungshebel 19 direkt auf den Längsauslegerbiegearm 13 oder indirekt über die Heizeinrichtung 3 auf den Längsauslegerbiegearm 13 einwirkt. Der Betätigungshebel 19 ist vorzugsweise mit dem Betätigungsgriff 10 gekoppelt.

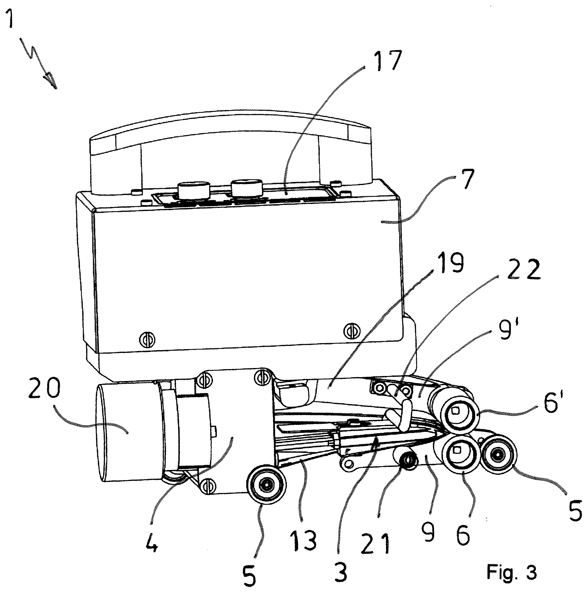

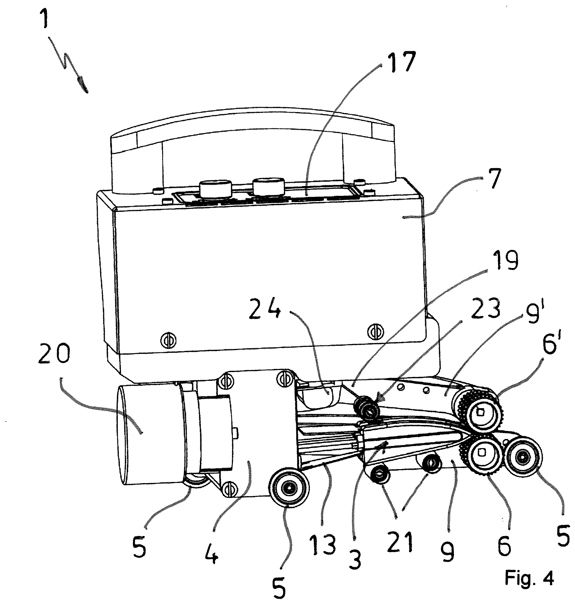

In einer in den nachfolgenden Figuren 3 und 4 gezeigten Schweißstellung des Schweißautomaten 1, bei der die Anpress- und Vorschubrollen 6 bzw. 6' in Anlage aneinander sind, wird der Rand der unteren Kunststoffbahn zwischen den Führungsstützrollen 21 und der Heizeinrichtung 3 geführt. In der gezeigten offenen Stellung der Spannvorrichtung 1 verlaufen, wie auch die Figur 1 zeigt, die Querausleger 9, 9' in einem spitzen Winkel zueinander. Die Anpress- und Vorschubrollen 6, 6' sind vertikal zueinander beabstandet, wobei die Heizeinrichtung 3 in etwa einen gleichen Abstand zu der Anpress- und Vorschubrolle 6 bzw. 6' aufweist und sich somit annähernd mittig zwischen diesen erstreckt.

Die Figur 3 zeigt den Schweißautomaten aus Figur 1 mit einem Niederhaltebügel 22 in Seitenansicht, mit Blick auf die Heizeinrichtung 3 und die Anpress- und Vorschubrollen 6, 6' in einer geschlossenen Stellung. Der Niederhaltebügel 22 steht seitlich von dem Betätigungshebel 19 ab und ist an einer Oberseite der Heizeinrichtung 3 in Anlage. Dabei drückt der Niederhaltebügel 22 in der geschlossenen Stellung des Schweißautomaten 1 die Heizeinrichtung 3 vertikal nach unten. Der Niederhaltebügel kommt insbesondere bei dünneren Kunststoffbahnen, d.h. Kunststofffolien in Einsatz, welche nur eine geringe thermische Kontaktierung benötigen.

Die Figur 4 zeigt eine Variante des Schweißautomaten aus Figur 1 mit einer Niederhalterolle 23 in Seitenansicht, mit Blick auf die Heizeinrichtung 3 und die Anpress- und Vorschubrollen 6, 6' in einer geschlossenen Stellung. Die Niederhalterolle 23 ist an einem seitlichen Haltearm 24 des Betätigungshebels 19 angeordnet. Dabei drückt die Niederhalterrolle 22 in der geschlossenen Stellung des Schweißautomaten 1 die Heizeinrichtung 3 vertikal nach unten und presst diese gegen die beiden Führungsstützrollen. Dabei presst sie auch den Rand der oberen und unteren in der Zeichnung nicht dargestellten Kunststoffbahnen gegen die Heizeinrichtung. Sie kommt insbesondere bei dickeren Kunststoffbahnen, d.h. Kunststofffolien in Einsatz, welche eine gute thermische Kontaktierung benötigen..

Figur 5 zeigt den Schweißautomat gemäß Figur 3 von unten mit Blick auf das Fahrgestell 2 mit dem Längsauslegerbiegearm 13 und der Heizeinrichtung 3 in Seitenansicht. Der Längsauslegerbiegearm 13, an dem die Heizeinrichtung 3 an einem vorderen Auslegerende 16 angeordnet ist, ist mit seinem hinteren Auslegerarm 14 an dem Tragerahmen 4 des Fahrgestells 2 befestigt. Der Längsauslegerbiegearm 13 ist sowohl mit dem Tragerahmen 4 als auch mit der Heizeinrichtung 3 verschraubt. Somit kann die Heizeinrichtung 3 einfach von dem Auslegerarm 13 gelöst werden, wenn dieser gereinigt oder ersetzt werden muss. Der Längsauslegerbiegearm 13 ist vorzugsweise aus einem Federblechzuschnitt hergestellt. Der Federblechzuschnitt weist eine typische Dicke von 0,3 bis 3,0 mm auf. Dabei ist die Breite des Längsauslegerbiegearms 13 derart gewählt, dass der Längsauslegerbiegearm 13 in seiner in der Gebrauchslage des Schweißautomaten horizontalen Richtung biegestarr ist. Außerdem ist der untere unbewegliche Querausleger 9 der Spannvorrichtung 8 in dieser Figur gut erkennbar, der die untere Anpress- und Vorschubrolle 6 trägt. Die untere Anpress- und Vorschubrolle 6 ist fluchtend mit der Heizeinrichtung 3 angeordnet. Dies gilt auch für die obere schwenkbare Anpress- und Vorschubrolle 6'. In dieser Darstellung sind auch die drei Laufrollen 5 des Fahrgestells 2 gut sichtbar.

## Patentansprüche

1. Schweißautomat (1) zum Verschweißen von überlappenden Kunststoffbahnen längs ihrer Rändern, mit einer an einem Fahrgestell (2) angeordneten Heizeinrichtung (3) zum randseitigen Anschmelzen der Kunststoffbahnen, wobei das Fahrgestell (2) einen Tragerahmen (4) aufweist, an dem mindestens zwei voneinander beabstandete Laufrollen (5), mindestens zwei einander gegenüberliegende Anpress- und Vorschubrollen (6, 6'), von denen jeweils eine untere (6) ortsfest angeordnet und die andere obere (6') schwenkbar gelagert ist, und mindestens ein Antriebsaggregat mit Getriebe (20) angeordnet sind, wobei die Laufrollen (5) zum Abstützen auf einem Untergrund, die Anpress- und Vorschubrollen (6, 6') zum Durchführen eines Randes der sich überlappenden Kunststoffbahnen und das Antriebsaggregat mit Getriebe (20) zum Antrieb der Anpress- und Vorschubrollen (6, 6') vorgesehen sind, mit einem Längsauslegerbiegearm (13) des Tragerahmens (4), der in Schweißrichtung von dem Tragerahmen (4) absteht und der zumindest in seiner in der Gebrauchslage des Schweißautomaten (1) vertikalen Richtung elastisch verformbar ist, wobei der Längsauslegerbiegearm (13) mit einem in Schweißrichtung hinteren Auslegerarmende (14) starr mit dem Tragerahmen 4 verbunden ist wobei an dem in Schweißrichtung vorderen Auslegerarmende (16) des Längsauslegerbiegearms (13) die Heizeinrichtung (3) mit einem in Schweißrichtung hinteren Einrichtungsabschnitt (15) unbeweglich befestigt ist und wobei an dem Tragerahmen (4) eine Betätigungseinrichtung (18) für den Längsauslegerbiegearm (13) mit der Heizeinrichtung (3) angeordnet ist, mit der das vordere Auslegerarmende (16) nach unten biegbar ist, wobei die Betätigungseinrichtung (18) über einen Betätigungshebel (19) direkt auf den Längsauslegerbiegearm (13) oder indirekt über die Heizeinrichtung (3) auf den Längsauslegerbiegearm (13) einwirkt und dabei den Längsauslegerbiegearm (13) in der Gebrauchslage des Schweißautomaten (1) vertikal nach unten biegt.

2. Schweißautomat nach Anspruch 1, **dadurch gekennzeichnet, dass** die Heizeinrichtung (3) den Längsauslegerbiegearm (13) in Schweißrichtung verlängert.

3. Schweißautomat nach Anspruch 1 oder 2, **dadurch gekennzeichnet, dass** der Längsauslegerbiegearm (13) in einem nicht verformten Zustand gegenüber der von den Fahrrollen (5) bestimmten Fahrebene in einem spitzen Winkel nach oben ansteigend angeordnet ist.

4. Schweißautomat nach Anspruch 1, **dadurch gekennzeichnet, dass** an dem Tragerahmen (4) eine Spannvorrichtung (8) für die mindestens eine schwenkbar gelagerte obere Anpress- und Vorschubrollen (6') angeordnet ist, die mit der Betätigungseinrichtung (18) für den Längsauslegerbiegearm (13) gekoppelt ist und die die mindestens eine obere schwenkbar gelagerte Anpress- und Vorschubrolle (6') gegen die mindestens eine ortsfeste untere Anpress- und Vorschubrolle (6) drückt.

5. Schweißautomat nach Anspruch 1 oder 4, **dadurch gekennzeichnet, dass** der Betätigungshebel (19) mindestens einen Niederhaltebügel (22) für den Längsauslegerbiegearm (13) aufweist, der bei Betätigung der Betätigungseinrichtung (18) auf die Heizeinrichtung (3) und/oder den Längsauslegerbiegearm (13) einwirkt und dabei den Längsauslegerbiegearm (13) in der Gebrauchslage des Schweißautomaten (1) vertikal nach unten biegt.

6. Schweißautomat nach Anspruch 5, **dadurch gekennzeichnet, dass** der mindestens eine Niederhaltebügel (22) bei voneinander getrennten Anpress- und Vorschubrollen (6, 6') den Rand der überlappenden Kunststoffbahn von der Heizeinrichtung (3) fernhält.

7. Schweißautomat nach Anspruch 1 oder 4, **dadurch gekennzeichnet, dass** der Betätigungshebel (19) mindestens eine Niederhalterolle (23) für den Längsauslegerbiegearm (13) aufweist, der bei Betätigung der Betätigungseinrichtung (18) auf die Heizeinrichtung (3) einwirkt und dabei den Längsauslegerbiegearm (13) in der Gebrauchslage des Schweißautomaten (1) vertikal nach unten biegt.

8. Schweißautomat nach Anspruch 7, **dadurch gekennzeichnet, dass** die mindestens eine Niederhalterolle (23) bei zwischen den Anpress- und Vorschubrollen (6,6') geführter überlappender Kunststoffbahn und in Anlage aneinander befindlichen Anpress- und Vorschubrollen (6, 6') den Rand dieser Kunststoffbahn gegen die der Heizeinrichtung (3) drückt.

9. Schweißautomat nach Anspruch 5 bis 8, **dadurch gekennzeichnet, dass** der Niederhaltebügel (22) bzw. die Niederhalterolle (23) einstellbar ist.

10. Schweißautomat nach einem der vorstehenden Ansprüche 3 bis 9, **dadurch gekennzeichnet, dass** die Heizeinrichtung (3) durch Biegen des Längsauslegerbiegearms (13) in der Gebrauchslage des Schweißautomaten (1) nach unten mittig zwischen den mindestens zwei einander gegenüberliegenden Anpress- und Vorschubrollen (6, 6') positionierbar ist, wobei sich die Heizeinrichtung (3) selbsttätig automatisch zentriert.

11. Schweißautomat nach einem der vorstehenden Ansprüche, **dadurch gekennzeichnet, dass** der Längsauslegerbiegearm (13) aus einem Federblechzuschnitt hergestellt ist.

12. Schweißautomat nach einem der vorstehenden Ansprüche, **dadurch gekennzeichnet, dass** der Längsauslegerbiegearm (13) eine Dicke von 0,3 bis 3,0 Millimetern aufweist.

13. Schweißautomat nach einem der vorstehenden Ansprüche, **dadurch gekennzeichnet, dass** eine Breite des Längsauslegerbiegearms (13) von einer Länge des Längsauslegerbiegearms (13) abhängig ausgebildet ist.

14. Schweißautomat nach einem der vorstehenden Ansprüche, **dadurch gekennzeichnet, dass** die Heizeinrichtung (3) ein Heizkeil ist.

## Claims

1. Automatic welding machine (1) for welding overlapping plastic material webs along their edges, with a heating device (3) arranged at a chassis (2) for melting the plastic material webs at the edges, the chassis (2) having a support frame (4) on which at least two running rollers (5) disposed offset from each other, at least two pressing and feed rollers (6, 6') disposed opposite to each other, wherein a respective lower one is disposed stationary and a respective other upper one is disposed pivotably supported, and at least one drive unit with a transmission (20) is arranged, wherein the running rollers (5) are configured for supporting on a base, the pressing and feed rollers (6, 6') for passing an edge of the overlapping plastic material webs through and the drive unit with the transmission (20) for driving the pressing and feed rollers (6, 6'), with a longitudinal bending arm (13) of the support frame (4) which protrudes in a welding direction from the support frame (4) and which is elastically deformable at least in a direction that is vertical in an operating position of the automatic welding machine (1), wherein the longitudinal bending arm is rigidly fixed at the support frame (4) with an end (14) of the bending arm that is oriented backward in the welding direction, wherein the heating device (3) is fixated with an installation section (15) that is oriented backward in the welding direction at an end (16) of the longitudinal bending arm that is oriented forward in the welding direction and wherein an actuation device (18) for the longitudinal bending arm (13) with the heating device (3) is arranged at the support frame (4), with which the forward arm end (16) can be bend downward, wherein the actuation device (18) impacts the longitudinal bending arm (13) directly through an actuation lever (19) or indirectly through the heating device (3) and thereby bends the longitudinal bending arm (13) vertically downward in the operating position of the automatic welding machine (1).

2. Automatic welding machine according to claim 1, **characterized in that** the heating device (3) extends the longitudinal bending arm (13) in the welding direction.

3. Automatic welding machine according to claim 1 or 2, **characterized in that** the longitudinal bending arm (13) is arranged in a non-deformed condition at an acute upward angle relative to a running plane that is defined by the running rollers (5).

4. Automatic welding machine according to claim 1, **characterized in that** a tensioning device (8) for the at least one pivotably supported upper pressing and feed roller (6') is arranged at the support frame (4), which is coupled with the actuation device (18) for the longitudinal bending arm (13) and which presses the at least one upper pivotably supported pressing and feed roller (6') against the at least one fixated lower pressing and feed roller (6).

5. Automatic welding machine according to claims 1 or 4, **characterized in that** the actuation lever (19) includes at least one down holder bar (22) for the longitudinal bending arm (13), which impacts the heating device (3) and/or the longitudinal bending arm (13) upon actuation of the actuation device (18) and thus bends the longitudinal bending arm (13) vertically downward in the operating position of the automatic welding machine (1).

6. Automatic welding machine according to claim 5, **characterized in that** the at least one down holder bar (22) keeps an edge of the overlapping plastic material web away from the heating device (3) when the pressing and feed rollers (6, 6') are separated from each other.

7. Automatic welding machine according to claims 1 or 4, **characterized in that** the actuation lever (19) includes at least one down holder roller (23) for the longitudinal bending arm (13), which impacts the heating device (3) upon actuation of the actuation device (18) and thus bends the longitudinal bending arm (13) vertically downward in the operating position of the automatic welding machine (1).

8. Automatic welding machine according to claim 7, **characterized in that** the at least one down holder roller (23) presses an edge of overlapping plastic material webs against the heating device (3) when the overlapping plastic material webs are supported between the pressing and feed rollers (6, 6') and the pressing and feed rollers (6, 6') contact each other.

9. Automatic welding machine according to claims 5 through 8, **characterized in that** the down holder bar (22) or the down holder roller (23) is adjustable.

10. Automatic welding machine according to one of the preceding claims 3 through 9, **characterized in that** the heating device (3) is positionable centered between the at least two opposite pressing and feed rollers (6, 6') by bending the longitudinal bending arm (13) downward in the operating position of the automatic welding machine (1), wherein the heating device (3) centers self-acting.

11. Automatic welding machine according to one of the preceding claims, **characterized in that** the longitudinal bending arm (13) is made from a spring elastic sheet metal blank.

12. Automatic welding machine according to one of the preceding claims, **characterized in that** the longitudinal bending arm (13) has a thickness of 0.3 - 3.0 mm.

13. Automatic welding machine according to one of the preceding claims, **characterized in that** a width of the longitudinal bending arm (13) is configured as a function of a length of the longitudinal bending arm (13).

14. Automatic welding machine according to one of the preceding claims, **characterized in that** the heating device (3) is a heating wedge.

## Revendications

1. Appareil (1) de soudage automatique, dévolu au soudage de nappes de matière plastique en chevauchement le long de leurs bords, muni d'un dispositif de chauffage (3) installé sur un châssis (2) et conçu pour amorcer une fusion marginale desdites nappes de matière plastique, ledit châssis (2) comportant un cadre de support (4) sur lequel sont disposés au moins deux galets de roulement (5) espacés l'un de l'autre, au moins deux rouleaux (6, 6') de pression et d'avance qui sont agencés en vis-à-vis l'un de l'autre et parmi lesquels, à chaque fois, un rouleau (6) situé en partie basse occupe un emplacement fixe et l'autre (6'), situé en partie haute, est monté à pivotement, et au moins un groupe d'entraînement pourvu d'une transmission (20), sachant que lesdits galets de roulement (5), lesdits rouleaux (6, 6') de pression et d'avance, et ledit groupe d'entraînement pourvu d'une transmission (20) sont prévus, respectivement, pour procurer un appui sur une structure sous-jacente, pour guider le défilement d'un bord des nappes de matière plastique en chevauchement, et pour entraîner lesdits rouleaux (6, 6') de pression et d'avance, ledit cadre de support (4) présentant un bras flexible (13) en porte-à-faux longitudinal qui fait saillie au-delà dudit cadre de support (4) dans la direction de soudage et est élastiquement déformable, au moins dans sa direction verticale en position d'utilisation de l'appareil (1) de soudage automatique, sachant que ledit bras flexible (13) en porte-à-faux longitudinal est relié rigidement audit cadre de support (4) par une extrémité (14) située à l'arrière dans la direction du soudage, sachant que le dispositif de chauffage (3) est fixé de manière immobile, par une région (15) située à l'arrière dans la direction du soudage, à l'extrémité (16) dudit bras flexible (13) en porte-à-faux longitudinal qui est située à l'avant dans ladite direction du soudage, et sachant qu'un dispositif d'actionnement (18) dédié audit bras flexible (13) en porte-à-faux longitudinal associé audit dispositif de chauffage (3), par lequel l'extrémité antérieure (16) dudit bras en porte-à-faux peut être fléchie vers le bas, est implanté sur ledit cadre de support (4), lequel dispositif d'actionnement (18) agit directement sur le bras flexible (13) en porte-à-faux longitudinal par l'intermédiaire d'un levier d'actionnement (19), ou indirectement sur ledit bras flexible (13) en porte-à-faux longitudinal par l'intermédiaire du dispositif de chauffage (3), et imprime alors un fléchissement vertical vers le bas audit bras flexible (13) en porte-à-faux longitudinal dans la position d'utilisation dudit appareil (1) de soudage automatique.

2. Appareil de soudage automatique selon la revendication 1, **caractérisé par le fait que** le dispositif de chauffage (3) marque le prolongement, dans la direction du soudage, du bras flexible (13) en porte-à-faux longitudinal.

3. Appareil de soudage automatique selon la revendication 1 ou 2, **caractérisé par le fait que** le bras flexible (13) en porte-à-faux longitudinal est agencé, à l'état non déformé, avec pente ascendante décrivant un angle aigu par rapport au plan de déplacement déterminé par les galets de roulement (5).

4. Appareil de soudage automatique selon la revendication 1, **caractérisé par le fait qu'**un dispositif de tension (8), implanté sur le cadre de support (4) et dédié au rouleau supérieur (6') de pression et d'avance à présence minimale, monté à pivotement, est couplé au dispositif d'actionnement (18) dédié audit bras flexible (13) en porte-à-faux longitudinal et presse ledit rouleau supérieur (6') de pression et d'avance à présence minimale, monté à pivotement, contre le rouleau inférieur fixe (6) de pression et d'avance à présence minimale.

5. Appareil de soudage automatique selon la revendication 1 ou 4, **caractérisé par le fait que** le levier d'actionnement (19) est doté d'au moins un étrier (22) de consignation à demeure qui est dédié au bras flexible (13) en porte-à-faux longitudinal et qui, lors d'une manœuvre du dispositif d'actionnement (18), agit sur le dispositif de chauffage (3) et/ou sur ledit bras flexible (13) en porte-à-faux longitudinal, et imprime alors un fléchissement vertical vers le bas audit bras flexible (13) en porte-à-faux longitudinal dans la position d'utilisation dudit appareil (1) de soudage automatique.

6. Appareil de soudage automatique selon la revendication 5, **caractérisé par le fait que** l'étrier (22) de consignation à demeure, à présence minimale, maintient le bord de la nappe de matière plastique chevauchante éloigné du dispositif de chauffage (3) lorsque les rouleaux (6, 6') de pression et d'avance sont séparés l'un de l'autre.

7. Appareil de soudage automatique selon la revendication 1 ou 4, **caractérisé par le fait que** le levier d'actionnement (19) est pourvu d'au moins un rouleau (23) de consignation à demeure qui est dédié au bras flexible (13) en porte-à-faux longitudinal et qui, lors d'une manœuvre du dispositif d'actionnement (18), agit sur le dispositif de chauffage (3) et imprime alors un fléchissement vertical vers le bas audit bras flexible (13) en porte-à-faux longitudinal dans la position d'utilisation dudit appareil (1) de soudage automatique.

8. Appareil de soudage automatique selon la revendication 7, **caractérisé par le fait que**, lorsque la nappe de matière plastique chevauchante est guidée entre les rouleaux (6, 6') de pression et d'avance, et lorsque lesdits rouleaux (6, 6') de pression et d'avance sont en applique l'un contre l'autre, le rouleau (23) de consignation à demeure, à présence minimale, presse le bord de cette nappe de matière plastique contre le dispositif de chauffage (3).

9. Appareil de soudage automatique selon les revendications 5 à 8, **caractérisé par** la faculté de régler, respectivement, l'étrier (22) de consignation à demeure ou le rouleau (23) de consignation à demeure.

10. Appareil de soudage automatique selon l'une des revendications 3 à 9 précédentes, **caractérisé par le fait que**, sous l'effet d'un fléchissement vers le bas du bras flexible (13) en porte-à-faux longitudinal, dans la position d'utilisation dudit appareil (1) de soudage automatique, le dispositif de chauffage (3) peut être positionné centralement entre les deux rouleaux (6, 6') de pression et d'avance à présence minimale, agencés en vis-à-vis l'un de l'autre, ledit dispositif de chauffage (3) se centrant alors automatiquement.

11. Appareil de soudage automatique selon l'une des revendications précédentes, **caractérisé par le fait que** le bras flexible (13) en porte-à-faux longitudinal est produit à partir d'un flan découpé en tôle élastique.

12. Appareil de soudage automatique selon l'une des revendications précédentes, **caractérisé par le fait que** le bras flexible (13) en porte-à-faux longitudinal présente une épaisseur de 0,3 à 3,0 millimètre(s).

13. Appareil de soudage automatique selon l'une des revendications précédentes, **caractérisé par le fait qu'**une largeur du bras flexible (13) en porte-à-faux longitudinal est conçue en fonction d'une longueur dudit bras flexible (13) en porte-à-faux longitudinal.

14. Appareil de soudage automatique selon l'une des revendications précédentes, **caractérisé par le fait que** le dispositif de chauffage (3) est un coin chauffant.
